# EUROPEAN PATENT APPLICATION

(11) **EP 2 386 214 A2**
(43) Date of publication of application: **16.11.2011**
(21) Application number: 11162387.2
(22) Date of filing: 14.04.2011
(51) Int. Cl.: A41D 19/00, G06F 3/044, G06F 3/01, G06F 3/039

(54) **Glove for operating a capacitive touch panel**

(30) Priority: 11.05.2010 TW 099114929
(71) Applicant: Tex-Ray Industrial Co., Ltd., Taipei City (TW); King's Metal Fiber Technologies Co., Ltd., Taipei City (TW)
(72) Inventor: Lee, James, Taipei City (TW); Huang, Hong-Hsu, Taipei City (TW)
(74) Representative: Viering, Jentschura & Partner

(57) **Abstract**

A glove for operating a capacitive touch panel is provided. The glove of the invention comprises a glove body and a plurality of conductive parts. The glove body has a plurality of fingertip parts and the conductive parts are sewn through on the fingertip parts respectively. When a user wears the gloves of the present invention, the static electricity in the user's fingertips would be coupled with the capacitive touch panel through the conductive parts for touch control.

## Description

This application claims the benefit of priority based on Taiwan Patent Application No. 099114929 filed on May 11, 2010, the disclosures of which are incorporated by reference herein in their entirety.

### CROSS-REFERENCES TO RELATED APPLICATIONS

Not applicable.

### BACKGROUND OF THE INVENTION

### Field of the Invention

The present invention relates to a glove, and more particularly, to a glove for operating a capacitive touch panel.

### Descriptions of the Related Art

A touch panel is a device disposed adjacent to a display, which can be controlled by a slight touch from a finger or a stylus so as to transmit data or read a message. As being convenient to use, touch panels have found wide application in various fields, for example, in portable electronic products, automatic teller machines (ATMs), industrial control systems and information inquiry machines. In terms of the induction principle, touch panels are classified into capacitive touch panels, resistive touch panels, electromagnetic touch panels and infrared touch panels. Capacitive touch panels can be operated simply by being touched slightly and touch from a finger causes little wear to such panels, so they have become much popular in recent years.

The capacitive touch panel makes use of electrostatic coupling between a human body and an electric field of the touch panel to determine coordinates according to an induced current. Hence, when a user wears a glove because of cold weather or other reasons, the user will be unable to operate the capacitive touch panel. For this reason, the glove worn by the user must be conductive in order for the user wearing the glove to operate the conductive touch panel.

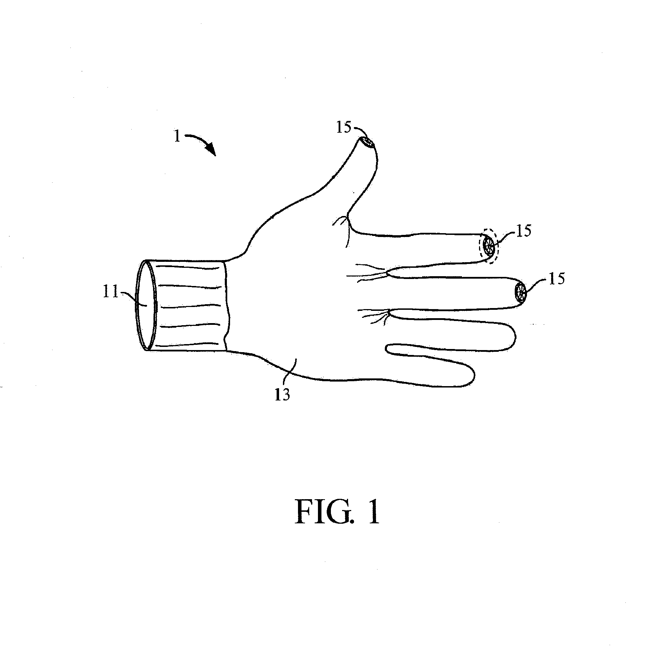

Referring to **FIG. 1****,** a conventional capacitive touch glove **1** comprises an inner layer **11,** an outer layer **13** and a plurality of holes **15.** The inner layer **11** is a conductive layer, and the outer layer **13** is made of an elastic material and is adapted to cover the inner layer **11.** The holes **15** are formed on fingertip parts of the outer layer **13,** and a user can peel the elastic outer layer **13** from the holes **15** so that the inner layer **11** is exposed from the outer layer **13.** Because the outer layer 13 has to be peeled off prior to use, this glove is much inconvenient to use; furthermore, because an insulating layer exists outside the conductive inner layer **11,** such problems as poor contact or inaccurate positioning are liable to occur when a touch panel is pressed by a finger of the user.

In another conventional glove for operating a capacitive touch panel, a palm portion and finger-root portions of the glove are made of a common glove material, but fingertip portions of the glove are made of conductive yarns. Therefore, the fingertip portions for operating the touch panel are conductive and, thus, are suitable to operate the capacitive touch panel. However, as the conductive yarns are more expensive than common yarns, such a glove is costly to manufacture.

In view of this, there is an urgent need in the art to provide a glove which can be conveniently used to operate a capacitive touch panel with high operational accuracy and is cheap to manufacture.

### SUMMARY OF THE INVENTION

An objective of the present invention is to provide a glove, which can be conveniently used to operate a capacitive touch panel with high operational accuracy and is cheap to manufacture. Thereby, a user can accurately operate a touch panel of the capacitive touch panel even when the use wears the glove.

To achieve the aforesaid objective, the glove of the present invention comprises a glove body and a plurality of conductive parts. The glove body has a plurality of fingertip parts, and the conductive parts are disposed to penetrate through the fingertip parts so that a fingertip of a user can couple with and control the capacitive touch panel through one of the conductive parts.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG. 1** is a schematic view of a conventional capacitive touch glove; and
**FIG 2** is a schematic view of a glove according to an embodiment of the present invention.

### DESCRIPTION OF THE PREFERRED EMBODIMENT

In the following description, a glove of the present invention will be explained with reference to an embodiment thereof. It shall be appreciated that, this embodiment of the present invention is not intended to limit the present invention to any specific environment, applications or particular implementations described in this embodiments. Therefore, description of the embodiment is only for purpose of illustration rather than to limit the present invention.

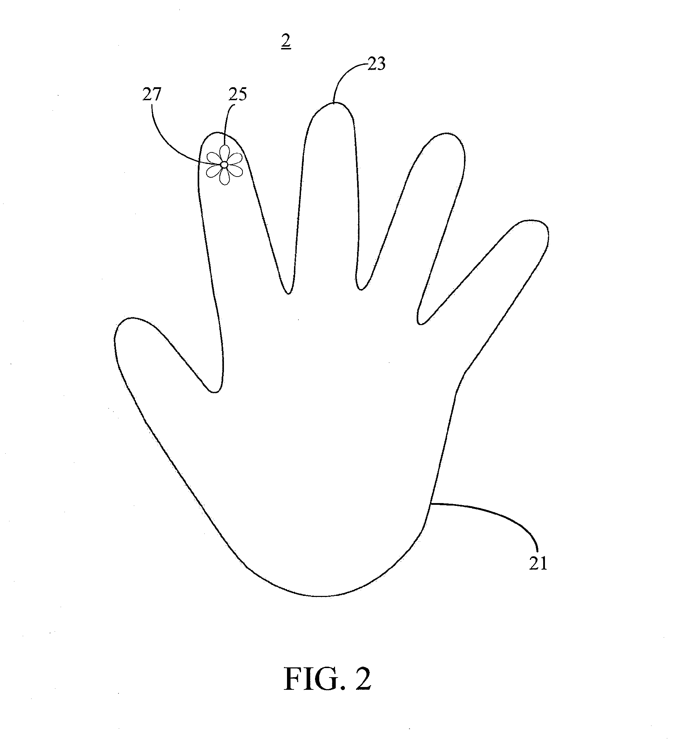

Firstly, referring to **FIG. 2****,** a schematic view of a glove **2** according to a preferred embodiment of the present invention is shown therein. The glove **2** is used to operate a capacitive touch panel. The capacitive touch panel comprises a touch panel and a microcontroller electrically connected to the touch panel.

The glove **2** of this embodiment comprises a glove body **21** and a plurality of conductive parts **25.** The glove body **21** has a plurality of fingertip parts **23,** and at least one of the fingertip parts **23** is provided with a conductive part **25** which is a conductive thread sewn through on the at least one fingertip parts **23.** In this embodiment, each of the five fingertip parts **23** of the glove **2** is provided with a conductive part **25** sewn through on the fingertip parts **23.**

When the glove assembly **2** of this embodiment is worn by a user, because of the conductive property of the conductive parts **25,** the static electricity in the fingertips of the user can be coupled with an electric field on the touch panel of the capacitive touch panel; and then, a corresponding position is computed by the microcontroller electrically connected to the capacitive touch panel. Thereby, the capacitive touch panel can be operated and controlled. It shall be appreciated that, the glove of the present invention can be used directly upon being worn without need of any preparations.

Furthermore, the conductive parts of the glove of the present invention may be in form of a pattern, for example, a thread shape, a geometric shape, a flower shape or an arrow shape. As shown in **FIG. 2** which corresponds to this embodiment, each of the conductive parts **25** is of a flower shape and is sewn as a protrusion **27.** When the user wears the glove of the present invention, the protrusions **27** of the conductive parts **25** can reduce a contact area with the panel of the capacitive touch panel, which facilitates the user to choose a desired position more accurately when operating the capacitive touch panel.

The glove body **21** of the glove **2** of the present invention may be just a common glove and needs no particular processing. Therefore, any design in appearance of the glove body **21** that is favored by a user can be adopted to cater for different needs of various users. However, depending on needs of the users, the glove body **21** of the glove of the present invention may also be made of a waterproof material (e.g., silica gel) for waterproof purpose.

A conductive thread used for the conductive parts **25** of the glove **2** of the present invention may be at least one of stainless steel fiber, carbon fiber, sputtered fiber and combinations thereof. Preferably, the conductive thread comprises polyethylene terephthalate (PET) in an amount of 80%. Compared to a conductive yarn of the prior art, this conductive thread is lower in cost and is easier to be sewn, so both the raw material cost and the production cost can be significantly reduced.

Accordingly, compared to the conventional glove for operating a capacitive touch panel, the glove of the present invention is lower in cost, more convenient to use and allows for more accurate operation; moreover, if necessary, the glove of the present invention can also be made to be waterproof to cater for needs of users. Therefore, the glove of the present invention can not only overcome the problems of the prior art effectively, but also improve the competitive power of capacitive touch panel products.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A glove for operating a capacitive touch panel, comprising:
a glove body having a plurality of fingertip parts; and
at least a conductive part being disposed to penetrate through at least one of the fingertip
parts;
wherein a fingertip of a user is coupling to control the capacitive touch panel with the at
least a conductive part.

2. The glove as claimed in claim 1, wherein the at least a conductive part comprises a plurality of conductive parts, and the conductive parts are sewn through on the fingertip parts respectively.

3. The glove as claimed in claim 2, wherein each of the conductive parts is a conductive thread sewn through on each of the fingertip parts respectively.

4. The glove as claimed in claim 3, wherein each of the conductive parts is sewn in a pattern.

5. The glove as claimed in claim 4, wherein the pattern is a thread shape, a geometric shape, a flower shape or an arrow shape.

6. The glove as claimed in claim 5, wherein the pattern comprises a protrusion.

7. The glove as claimed in claim 3, wherein the glove body is a waterproof material.

8. The glove as claimed in claim 7, wherein the waterproof material comprises silica gel.

9. The glove as claimed in claim 3, wherein a material of the conductive thread comprises at least one of stainless steel fiber, carbon fiber, sputtered fiber and combinations thereof.

10. The glove as claimed in claim 9, wherein the material of the conductive thread further comprises polyethylene terephthalate (PET).

11. The glove as claimed in claim 10, wherein the conductive thread comprises the PET in an amount of 80%.
